# DEMANDE DE BREVET EUROPEEN

(11) **EP 4 778 799 A1**
(43) Date de publication de la demande: **22.07.2026**
(21) Numéro de dépôt: 25221250.1
(22) Date de dépôt: 05.12.2025
(51) Int. Cl.: B60W 30/14

(54) **PROCEDE ET SYSTEME DE REGULATION DE VITESSE D'UN VEHICULE POUR GERER DES CHANGEMENTS DE VITESSE DE CONSIGNE**

(30) Priorité: 21.01.2025 FR 2500590
(71) Demandeur: Stellantis Auto SAS, 78300 Poissy (FR)
(72) Inventeur: DUSI, Jaques, 77220 GRETZ ARMAINVILLIERS (FR); MILLERAND, Mathieu, 92370 CHAVILLE (FR)
(74) Mandataire: ESIP

(57) **Abrégé**

Procédé de régulation de vitesse d'un véhicule automobile parcourant un itinéraire sur une voie routière, le procédé comprenant les étapes:
a- identification d'une modification volontaire de la vitesse de consigne courante par le conducteur et initialisation d'une première fenêtre temporelle d'inhibition (W1),
b- détermination d'une nouvelle vitesse limite applicable (NVL1) différente de la vitesse de consigne courante, sur une prochaine portion de l'itinéraire à parcourir,
c- passage à l'endroit de l'applicabilité de la nouvelle vitesse limite applicable, à un instant de bascule (tb),
d- si, à l'instant de bascule, la première fenêtre temporelle d'inhibition est encore active, la terminer et lancer une deuxième fenêtre temporelle d'inhibition (W2), le procédé prévoyant que pendant que la première ou la deuxième fenêtre temporelle d'inhibition est active, alors une proposition de modification ou une modification automatique de la vitesse de consigne n'est pas faite.

## Description

La présente invention concerne les procédés et systèmes de régulation de vitesse de véhicule, notamment pour un véhicule automobile, qui peut être équipé de diverses fonctions d'aide à la conduite.

En particulier, la présente invention concerne la gestion des vitesses de consigne d'un système de régulation de vitesse et/ou d'un système de limitation de vitesse, lorsque le véhicule parcourt un itinéraire où diverses vitesses limite sont applicables.

Il est connu que la fonction régulateur de vitesse peut être simple ou peut être adaptative c'est à dire avec une adaptation à la distance qui sépare le véhicule d'intérêt du véhicule qui le précède (on parle alors de ACC de l'anglais 'Adaptative Cruise Control').

Certains régulateurs de vitesse de véhicule mettent en œuvre des fonctions qui sont destinées à informer le conducteur du véhicule dès qu'une nouvelle vitesse limite, différente de la vitesse de consigne courante utilisée pour réguler la vitesse du véhicule, a été obtenue et/ou est applicable sur une portion d'itinéraire à parcourir incessamment.

La nouvelle vitesse limite peut être obtenue à partir de la détection d'un panneau indicateur de cette nouvelle vitesse limite par une caméra installée dans une partie avant du véhicule. Cette nouvelle vitesse limite peut aussi être obtenue à partir d'une base de données cartographique stockée dans le véhicule, ou encore à partir d'une transmission de données à travers un canal de communication.

Une nouvelle vitesse de consigne peut être déterminée à partir de la nouvelle vitesse limite. Typiquement, la nouvelle vitesse de consigne est égale à la nouvelle vitesse limite.

Ces fonctions peuvent être activées dès qu'une nouvelle vitesse limite est obtenue et avant que le véhicule n'atteigne un panneau indicateur de la nouvelle vitesse limite. On parle alors de fonctions AISA, de l'anglais Anticipated Intelligent Speed Adaptation, en français adaptation de vitesse intelligente et anticipée ou ALSA, de l'anglais Anticipated Legal Speed Auto, en français vitesse réglementaire automatique et anticipée.

D'autres fonctions peuvent n'être activées que lorsque le véhicule a atteint et dépassé un panneau indicateur d'une vitesse limite. On parle alors de fonctions ISA, de l'anglais Intelligent Speed Adaptation, en français adaptation de vitesse intelligente, et LSA, de l'anglais Legal Speed Auto, en français vitesse réglementaire automatique.

Les fonctions ISA et AISA produisent une proposition de changement de vitesse de consigne passant d'une vitesse de consigne courante à la nouvelle vitesse de consigne. Le régulateur de vitesse commande l'affichage de cette proposition de changement de vitesse de consigne selon un mode d'affichage sur une IHM (Interface Homme Machine) tel qu'un écran du véhicule par exemple. Le changement de vitesse de consigne est alors effectif si le conducteur du véhicule valide cette proposition de changement de vitesse de consigne.

Il a déjà été décrit ce genre de système et procédé selon le document WO2023/218146. Il est proposé dans le document en question de ne pas procéder à un changement automatique et même de ne pas proposer un changement vers la nouvelle vitesse limite dans le cas où le conducteur a pris la main dans les instants précédents pour ajuster 'manuellement' la vitesse de consigne à une nouvelle valeur. Pour ceci, il est prévu une temporisation qui est lancée dès lors que le conducteur effectue une modification volontaire de la vitesse de consigne ; pendant cette temporisation, il n'est pas proposé de changement vers la nouvelle vitesse limite à appliquer.

Toutefois, les inventeurs se sont aperçus que, lorsqu'il y a plusieurs vitesses limite applicables en cascade, qui se succèdent sur un tronçon d'itinéraire à parcourir, le procédé proposé n'était pas satisfaisant car la deuxième modification de vitesse limite applicable en séquence n'était pas proposée au conducteur. Ce type de séquence de panneaux multiples peut se trouver par exemple sur les bretelles de sortie d'autoroute ou encore sur l'approche d'un chantier ou l'approche d'un péage.

Il reste donc un besoin de proposer une solution qui permette au conducteur de prendre la main lorsqu'il le souhaite pour ajuster lui-même la vitesse de consigne, mais aussi de proposer au conducteur les changements pertinents de vitesse de consigne en fonction des vitesses limite successives, dès lors que le conducteur ne manifeste pas le désir d'ajuster manuellement la vitesse de consigne.

À cet effet, la présente invention propose un procédé de limitation ou régulation de vitesse d'un véhicule automobile permettant de gérer une vitesse de consigne, en fonction au moins d'une action d'un conducteur du véhicule et/ou d'une ou plusieurs vitesses limites applicables, lorsque le véhicule parcours un itinéraire sur une voie routière :
caractérisé en ce que le procédé comprend les étapes suivantes :
   - identification d'une modification volontaire de la vitesse de consigne courante par le conducteur à un premier moment et initialisation à ce moment d'une première fenêtre temporelle d'inhibition d'une première durée prévisionnelle,
   - acquisition ou réception ou détermination d'une nouvelle vitesse limite applicable différente de la vitesse de consigne courante, sur une prochaine portion de l'itinéraire à parcourir,
   - passage à l'endroit de l'applicabilité de la nouvelle vitesse limite applicable, à un instant de bascule,
   - si à l'instant de bascule, la première fenêtre temporelle d'inhibition est encore active, terminer la première fenêtre temporelle d'inhibition et lancer une deuxième fenêtre temporelle d'inhibition d'une deuxième durée prédéterminée,
et caractérisé en ce que le procédé prévoit que pendant que la première ou la deuxième fenêtre temporelle d'inhibition est active, alors une modification automatique de la vitesse de consigne courante n'est pas entreprise et une proposition de modification de la vitesse de consigne courante n'est pas faite.

Grâce aux dispositions promues ci-dessus, on écourte la première fenêtre temporelle d'inhibition après le passage devant le panneau de manière à pouvoir réagir ensuite à une nouvelle modification de la vitesse limite qui est applicable à bref délai et/ou à courte distance après la précédente.

Avantageusement, grâce à la deuxième fenêtre temporelle d'inhibition, on procure ainsi une ré-autorisation à bref délai pour accepter une nouvelle situation de limitation à courte distance (par ex à 50m ou à 100 m).

On remarque que la première fenêtre temporelle d'inhibition est réinitialisée à chaque modification volontaire de la vitesse consigne par le conducteur.

Si à l'instant de bascule (notée 'tb' aux figures) la première fenêtre temporelle d'inhibition est échue, la deuxième fenêtre temporelle d'inhibition n'est pas lancée.

Bien entendu, si le conducteur procède à une modification volontaire de la vitesse consigne pendant la deuxième fenêtre temporelle d'inhibition, la première fenêtre temporelle d'inhibition est relancée.

Autrement dit si une des fenêtres temporelles d'inhibition est en cours, il n'y a pas changement automatique ou de proposition de changement, et donc pas de modification de la vitesse de consigne courante (sauf par SET+ et SET- bien entendu) d'où le qualificatif de fenêtre d'inhibition.

L'instant de bascule (notée 'tb' aux figures) est l'instant temporel défini par un passage du véhicule devant un panneau indicateur de la nouvelle vitesse de consigne, ou exprimé plus généralement le lieu d'applicabilité d'une nouvelle vitesse limite, que cette vitesse ait été obtenue via une caméra de lecture de panneaux ou reçue à partir de la base cartographique.

Comme on le verra plus avant, le système est particulièrement avantageux dans le cas d'un itinéraire sur circulation autoroutière, avec des changements de vitesse limite fréquents dont certains peuvent être intermittents par exemple les zones de travaux, les zones de pollution à limitation circonstancielle.

Avantageusement, la méthode proposée est très simple et ne nécessite pas de mémoriser des actions du conducteur, il suffit de gérer les deux temporisations.

D'ailleurs, on remarque que les première et deuxième fenêtres d'inhibition peuvent utiliser toutes deux les mêmes ressources, à savoir par exemple la même zone mémoire ou le même compteur/décompteur.

On remarque qu'une validation de proposition acceptée par le conducteur ne lance pas la première fenêtre d'inhibition (cela n'est pas assimilé ici à une modification volontaire de la vitesse de consigne courante), ou le cas échéant ne relance pas la première fenêtre d'inhibition à son début si elle était en cours, la temporisation continue de s'écouler.

Dans le présent document, le procédé est applicable à une fonction de régulation de vitesse, simple ou adaptative, mais aussi applicable à une fonction de limitation/limitateur de vitesse.

Dans le présent document il faut comprendre par « modification volontaire de la vitesse de consigne courante par le conducteur » une action sur un bouton 'SET+' ou un bouton 'SET-', ces boutons pouvant être des boutons physiques ou des icones sur un écran tactile. Il peut s'agir aussi d'une commande vocale par exemple la locution « plus vite » ou « moins vite ». À l'inverse, une validation d'une proposition faite par le système n'est pas considérée ici comme une modification volontaire.

Dans le présent document il faut comprendre par « fenêtre temporelle d'inhibition active » la condition où la temporisation correspondante n'est pas encore échue.

Selon une réalisation, la deuxième durée prédéterminée est paramétrable. Selon une solution, sa valeur peut dépendre de la vitesse instantanée courante du véhicule ou de la vitesse de consigne courante.

La deuxième durée prédéterminée peut être choisie entre 250 ms et 1,5 seconde. DT2 peut être choisie entre 500 ms et 1 seconde. Selon une option possible, on peut choisir la deuxième durée prédéterminée inversement proportionnel à la vitesse courante.

Selon une option particulière, la valeur de la deuxième durée prédéterminée peut être très faible c'est-à-dire ce qui revient en pratique pour le conducteur d'avoir la possibilité d'accepter une nouvelle vitesse limite dès le passage du panneau précédent

Ainsi, peu après le passage du lieu d'application de la nouvelle vitesse limite, le système peut accepter de recevoir une nouvelle modification de la vitesse limite.

Selon une réalisation, la première durée prédéterminée est paramétrable et sa valeur peut dépendre de la vitesse instantanée courante du véhicule ou de la vitesse de consigne courante.

DT1 peut valoir par exemple 2 à 6 secondes. Selon une option, la première durée prédéterminée peut être choisie entre 3 et 5 secondes.

Selon une réalisation, une nouvelle modification volontaire de la vitesse de consigne courante par le conducteur, pendant que la première ou la deuxième fenêtre temporelle d'inhibition est active, réinitialise la première fenêtre temporelle d'inhibition.

On relance la temporisation à chaque nouvelle action de changement volontaire de la vitesse de consigne (par exemple par les boutons 'SET+' ou 'SET-').

Selon une réalisation alternative avantageuse, il est prévu que si, après acquisition ou réception ou détermination d'une nouvelle vitesse limite applicable différente de la vitesse de consigne courante avec proposition de modification de la vitesse de consigne courante, et si, avant l'endroit de l'applicabilité de la nouvelle vitesse limite applicable, le conducteur génère une modification volontaire de la vitesse de consigne courante, la proposition de modification de la vitesse de consigne courante, si elle était affichée, est supprimée.

Ainsi, on donne priorité à la modification 'manuelle' par le conducteur. Si celuici a pris la main, on ne lui propose plus la modification suggérée par le système.

Selon une réalisation, la première fenêtre temporelle d'inhibition peut être choisie en fonction de la différence entre la vitesse de consigne courante et la nouvelle vitesse limite applicable sur une prochaine portion de l'itinéraire à parcourir, notamment en fonction du signe de la différence.

On peut ainsi avoir une légère différence de stratégie lorsque les vitesses limite sont croissantes par rapport à la stratégie applicable lorsque les vitesses limite sont décroissantes.

Selon une réalisation, en complément ou en alternative, la nouvelle vitesse limite applicable est obtenue au moins par lecture des panneaux de signalisation via une caméra embarquée.

Moyennant quoi, la lecture des panneaux de vitesse limite via une caméra permet d'obtenir la réalité de la situation sur la voie routière, y compris lorsque des changements récents ont été effectués par exemple une ouverture récente de chantier de travaux routiers occasionnant une réduction de la vitesse limite nominale.

Selon une réalisation, la nouvelle vitesse limite applicable est obtenue au moins à partir d'une base cartographique.

Cette solution permet de pallier une absence de panneau de signalisation de vitesse limite, ou un masquage potentiel d'un tel panneau, notamment par un camion.

Selon une réalisation, l'endroit d'applicabilité de la nouvelle vitesse limite applicable est déterminé en fonction de la position courante du véhicule.

La géo-position courante du véhicule peut être obtenue via un système GPS ou tout système équivalent. Le positionnement précis des panneaux de signalisation peut être déduit des images issues de la caméra ou peut être déterminé à partir de la base cartographique des limitations de vitesse.

L'invention concerne en outre un système de commande comprenant au moins une unité de commande configurée pour mettre en œuvre le procédé tel que décrit précédemment.

L'invention concerne en outre un véhicule comprenant un système de commande tel que décrit précédemment.

L'invention sera davantage détaillée par la description de modes de réalisation non limitatifs, et sur la base des figures annexées illustrant des variantes de l'invention, dans lesquelles :

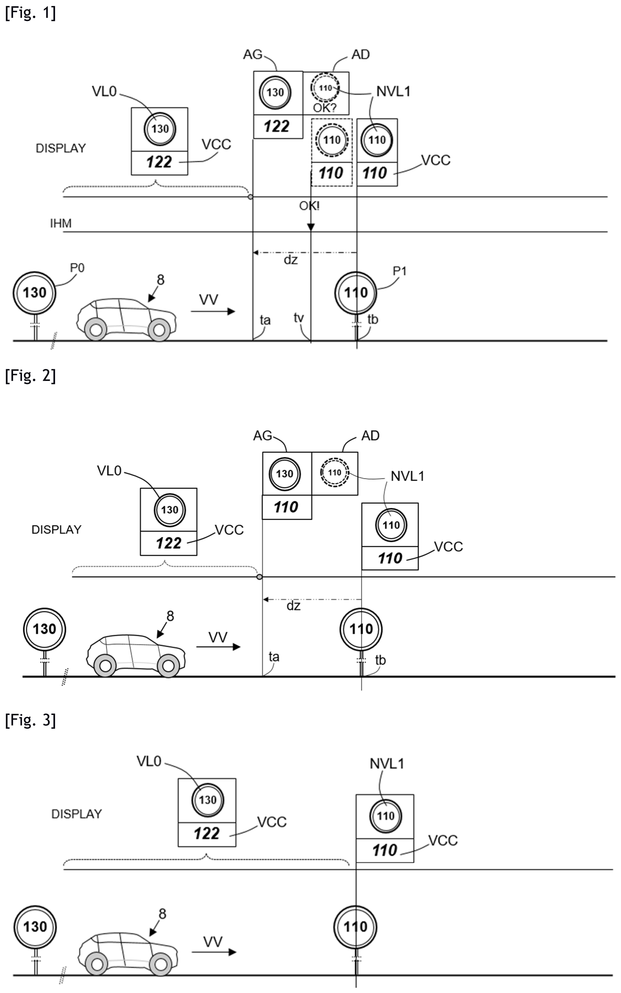

[Fig.1] est un diagramme de représentation schématique d'un véhicule automobile circulant vers la droite sur une voie routière avec au moins un changement de vitesse limite, avec en partie basse les panneaux de signalisation de limitation de vitesse,
en partie haute les informations qui sont affichées à destination du conducteur et en partie intermédiaire les actions que le conducteur effectue le cas échéant sur les boutons de réglage de la consigne de vitesse ou plus généralement sur le système de régulation de vitesse, le conducteur acceptant ici une réduction de vitesse limite proposée par le système par validation ('OK'),
[Fig.2] est un diagramme analogue dans le principe à celui de la figure 1, dans une configuration où le changement de vitesse de consigne est réalisé automatiquement à partir des informations de vitesse limite sur le tronçon de voie à parcourir avec anticipation de l'affichage,
[Fig.3] est analogue à la figure 2, sans anticipation de l'affichage,
[Fig.4] est un diagramme analogue dans le principe à celui de la figure 1, avec une ligne temporelle en supplément tout en bas du graphique, avec un cas de figure avec deux changements de vitesse limite en cascade, dans une configuration où le conducteur modifie volontairement manuellement la vitesse de consigne courante à l'approche du premier changement de vitesse limite, cas de figure où la présente invention présente tout son intérêt, pour gérer un deuxième changement de vitesse limite,
[Fig.5] est analogue à la figure 4, dans le cas de figure où la future vitesse limite à intervenir est affichée avant que le conducteur ne modifie volontairement manuellement la vitesse de consigne courante,
[Fig.6] est un diagramme fonctionnel d'un exemple de système de commande installé dans un véhicule automobile et destiné à mettre en œuvre le procédé proposé, [Fig.7] illustre schématiquement un logigramme montrant des étapes du procédé.

Sur les différentes figures, les mêmes références désignent des éléments identiques ou similaires. Pour des raisons de clarté de l'exposé, certains éléments ne sont pas nécessairement représentés à l'échelle.

On décrit à présent, en références à la figure 1, un véhicule automobile 8. Il s'agit par exemple d'une voiture particulière. Mais la présente invention n'est pas limitée à ce type de véhicule. Elle concerne en effet tout type de véhicule terrestre pouvant circuler sur des voies de circulation faisant l'objet de limitations de vitesses variables. Ainsi, la présente invention concerne également et non limitativement les véhicules utilitaires, les motocyclettes, les autobus, et les camions.

Les vitesse limite considérée ici peuvent aller de 130 km/h à 10 km/h en passant par 120, 110, 100, 90, 80, 70, 60, 50, 30, 20 sans que ces valeurs ne soient exhaustives ou limitatives. Les voies parcourues considérées peuvent être des autoroutes, des routes du réseau primaire ou du réseau secondaire. Certaines limites de vitesse sont implicites à l'intérieur de certaines zones urbaines. Certaines limites de vitesse dépendent de l'ensemble roulant par exemple du cas du tractage d'une remorque ou d'une caravane (limites dites conditionnelles). Certaines limites de vitesse peuvent dépendre des conditions météorologiques (pluie, verglas), voire des niveaux de pollution locaux.

L'invention couvre d'une part le cas où les vitesses limite qui se présentent sont décroissantes et d'autre part le cas où les vitesses limite qui se présentent sont croissantes.

Par ailleurs, le véhicule 8 peut comprendre un groupe motopropulseur de type conventionnel, c'est-à-dire ne comportant comme source de couple un moteur à combustion interne. Mais ce véhicule peut comprendre un groupe motopropulseur de type hybride, c'est-à-dire comportant un moteur thermique et au moins une machine électrique capable de fournir du couple à partir de l'énergie stockée dans une batterie. Le véhicule peut être aussi de type 100% électrique, auquel cas on parle de groupe électromoteur au lieu de groupe motopropulseur.

Le véhicule comprend au moins une unité de commande 2 en charge de piloter le couple délivré aux roues du véhicule, quelque soit le type du groupe motopropulseur ou électromoteur. L'unité de commande en question est impliquée dans un système de limitation et/ou régulation de vitesse qui équipe le véhicule. L'unité de commande en question réalise tout ou partie de la fonction de régulation de vitesse et/ou de fonction de limitation de vitesse.

Bien entendu, la fonction régulation de vitesse pourrait être mise en œuvre par plus d'une unité de commande, par exemple deux unités de commande, à savoir l'unité de commande en charge du groupe motopropulseur ou électromoteur et une autre unité de commande ayant le rôle de superviseur, l'affichage pouvant être géré par encore une autre ou plusieurs autres unités électroniques embarquées. Il est entendu que toutes les répartitions matérielles et/ou fonctionnelles entre unités qui seraient différentes de celle présentée aux figures génériques sont considérées dans le cas de la présente invention.

Comme connue en soi, la fonction de régulation de vitesse est en charge, lorsqu'elle est activée, d'asservir la vitesse de déplacement du véhicule VV sur une vitesse de consigne courante notée VCC. La différence entre la vitesse réelle et la vitesse de consigne courante est généralement minime, e.g. de l'ordre de 1 à 2 km/h, sauf dans le cas particulier des parcours en descente où la vitesse réelle peut excéder la vitesse de consigne courante. De même, de façon connue, si le conducteur appuie suffisamment sur la pédale d'accélérateur, il reprend la main sur la fonction de régulation de vitesse et la vitesse de déplacement courante VV peut excéder la vitesse de consigne courante VCC.

La vitesse de consigne courante VCC est choisie au moins par le conducteur. Dans certains cas, la vitesse VCC peut être proposée par la fonction et validée ou non par le conducteur. En alternative ou en complément, dans certains cas, la vitesse VCC peut être imposée par la fonction de régulation de vitesse, par exemple en accord avec des contraintes réglementaires locales.

De la fonction limitation de vitesse, la vitesse de consigne courante VCC constitue une limite supérieure à ne pas franchir, mais c'est généralement le conducteur qui indique son souhait de vitesse courante par son action volontaire sur la pédale d'accélérateur.

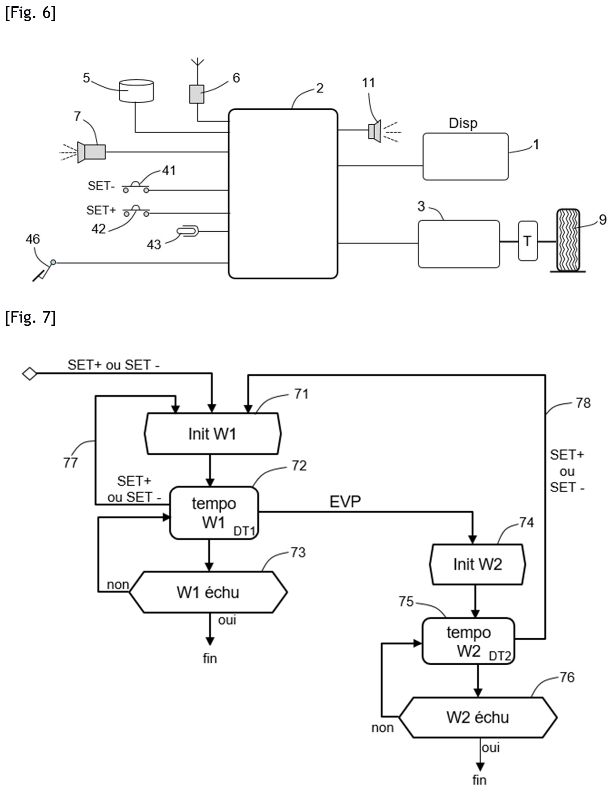

Comme illustré à la figure 6, le système impliqué comprend au moins un bouton 42 ('SET+') pour augmenter la vitesse de consigne et un autre bouton 41 ('SET-') pour diminuer la vitesse de consigne. Par exemple, un appui sur un de ces boutons provoque respectivement un incrément ou un décrément de 1 km/h ou de 2 km/h concernant la vitesse de consigne.

Il faut remarquer que les boutons en question peuvent être des boutons physiques, généralement placés sur le volant de conduite, et/ou peuvent être des boutons logiques, c'est-à-dire par exemple des icônes à cliquer sur un écran interactif de l'interface homme-machine.

Selon une autre réalisation alternative, la vitesse de consigne peut être modifiée par rotation d'une molette, par exemple une molette à crans à effet relatif.

En complément, il peut être possible de modifier volontairement la vitesse de consigne par une commande vocale grâce au microphone 43.

Dans tous les cas, le conducteur peut reprendre la main sur la vitesse de consigne et la modifier manuellement volontairement, même si les automatismes décrits ci-après sont présents sur la fonction.

### Affichage à destination du conducteur

La vitesse courante du véhicule VV est mise à disposition du conducteur par affichage dans un combiné d'instrument qui se situe habituellement derrière le volant de conduite. La vitesse courante du véhicule peut être affichée en complément sur un affichage tête haute visible sur le bas du parebrise, et/ou encore sur une partie de l'écran multimédia central du véhicule.

De manière similaire, la vitesse de consigne courante VCC de la fonction limitation/régulation de vitesse est mise à disposition du conducteur par affichage dans le combiné d'instrument. Il n'est pas exclu de dupliquer cette information sur l'affichage tête haute et/ou sur la partie de l'écran multimédia susmentionnée.

Dans le contexte de la présente invention, il est aussi prévu d'afficher la vitesse limite courante VL0 applicable sur le tronçon de voie parcouru actuellement par le véhicule. Dans certaines phases de préparation à une transition, il est aussi considéré d'afficher une nouvelle vitesse limite NVL1 qui deviendra applicable sur un tronçon de voie à parcourir à bref délai.

Le ou les éléments permettant l'affichage des informations précitées sont symboliquement représentées par le repère 1 à la figure 6.

Le groupe électromoteur et/ou groupe motopropulseur, symboliquement représenté par le repère 3 à la figure 6, entraine les roues 9 du véhicule via une transmission T comme connu en soi. Le couple délivré aux roues est contrôlé par l'unité de commande 2.

Le système mis en œuvre comprend également une pédale d'accélérateur 46 qui reçoit en temps normal la consigne de vitesse hors régulation de vitesse, et qui peut être sollicitée sous régulation pour un dépassement ponctuel de la vitesse de consigne.

Le système mis en œuvre comprend également une base de données cartographique 5, un ou plusieurs coupleurs de communication 6 destinés à échanger des données avec des antennes de réseaux cellulaires ou directement avec des éléments de l'infrastructure routière.

Le système mis en œuvre comprend également un haut-parleur 11 qui peut être utilisé pour compléter une interface homme-machine d'affichage graphique par un message audio ou un bip d'alerte.

### Lecture des panneaux de signalisation de vitesse limite ou acquisition des vitesses limite

Le véhicule est équipé d'une ou plusieurs caméras 7 en charge de capturer des clichés ou des séquences vidéo de l'environnement situé à l'avant du véhicule. Le traitement des images permet d'extraire les panneaux de signalisation qui manifestent l'indication d'une vitesse limite à respecter.

Il est possible, en alternative ou en complément de la lecture par caméra, d'acquérir ou de recevoir une nouvelle vitesse limite applicable par d'autres moyens.

La nouvelle vitesse limite applicable peut être obtenue à partir d'une base cartographique 5. Cette base cartographique peut contenir pour chaque tronçon de voie la vitesse limite applicable. La base cartographique en question peut être embarquée et mise à jour de temps en temps par divers moyens possibles.

La nouvelle vitesse limite applicable peut être reçue via des moyens de communication sans fil à partir d'un serveur de données. Dans ce cas, une des unités électroniques du véhicule peut requérir les vitesses limite applicables dans la région géographique parcourue par le véhicule (pour chaque tronçon) et en particulier sur l'itinéraire planifié si un itinéraire à suivre est défini dans le système de navigation. Les différentes méthodes proposées ci-dessus peuvent être combinées et ou recoupées afin de fiabiliser l'information des vitesses limites applicables.

C'est ainsi qu'on peut utiliser la locution « d'acquisition ou de réception ou de détermination » d'une nouvelle vitesse limite applicable NVL1 sur une prochaine portion de l'itinéraire à parcourir.

Cette information est particulièrement pertinente si la nouvelle vitesse limite applicable est différente de la vitesse limite applicable actuellement.

Selon un exemple de base illustré à la figure 1, le véhicule circule sur une route à une vitesse limite VL0 de 130 km/h, avec la fonction régulation de vitesse active et une vitesse de consigne courante de 122 km/h. Une possible nouvelle vitesse de consigne de 110 km/h est déterminée à partir d'une nouvelle vitesse limite NVL1 obtenue par lecture d'un panneau P1 qui devient visible dans l'environnement frontal du véhicule au fur et à mesure de l'avancement de ce dernier.

A la figure 1, à un instant temporel ta, le régulateur de vitesse produit une proposition de changement de vitesse de consigne passant de 122km/h à 110 km/h. Cette proposition est affichée selon un mode d'affichage. Selon l'exemple, ce mode d'affichage peut comprendre une zone d'affichage qui affiche en haut à gauche AG la vitesse limite courante (130 km/h) et en dessous la vitesse de consigne courante du véhicule (122 km/h), et à droite AD des informations présentant la nouvelle vitesse limite (110 km/h), avec une zone d'interfaçage portant l'inscription « Ok ? » proposant au conducteur du véhicule de valider la nouvelle vitesse de consigne (110 km/h).

A l'instant temporel tv, le conducteur valide en effet cette proposition et la fonction de régulateur de vitesse déclenche une décélération du véhicule pour que sa vitesse atteigne la nouvelle vitesse de consigne. Une accélération peut être déclenchée si la nouvelle vitesse de consigne est supérieure à la vitesse de consigne courante, mais ceci prend effet après le passage de la nouvelle vitesse limite, comme détaillé ci dessous.

A l'instant temporel tb, la nouvelle vitesse limite devient applicable à l'endroit du passage devant le panneau P1 (le panneau P0 peut se situer très en amont.

La distance d'anticipation dz par rapport au panneau P1 peut être de l'ordre de quelques dizaines de mètres, jusqu'à plus d'une centaine de mètres en fonction de la vitesse courante de déplacement et de la possibilité de lire le panneau via la caméra 7 (cf figure 6).

La figure 2 illustre un cas voisin du précédent où le changement vers une nouvelle vitesse de consigne est automatique dès lors qu'une nouvelle vitesse limite NVL1 est détectée sur la voie à parcourir. La nouvelle vitesse limite est affichée en anticipation, mais le basculement vers la nouvelle vitesse de consigne n'est pas sujette à l'approbation du conducteur. L'application de la nouvelle vitesse limite NVL1 peut se produire de manière anticipée peu avant le passage au niveau du panneau P1. La vitesse de consigne peut concerner ici la fonction limitation de vitesse.

La figure 3 illustre un cas voisin du précédent où le changement vers une nouvelle vitesse de consigne est automatique dès lors qu'une nouvelle vitesse limite NVL1 est détectée sur la voie à parcourir. La nouvelle vitesse limite n'est pas affichée en anticipation, le basculement vers la nouvelle vitesse de consigne ici 110 km/h est effectuée automatiquement au passage du panneau P1. Ici aussi, la vitesse de consigne peut concerner la fonction limitation de vitesse.

On remarque que dans les trois premières figures, le conducteur n'effectue aucune action sur les boutons de réglage de la vitesse de consigne, à l'inverse des deux figures suivantes où le conducteur effectue des actions sur les boutons de réglages de la vitesse de consigne SET+ ou SET-.

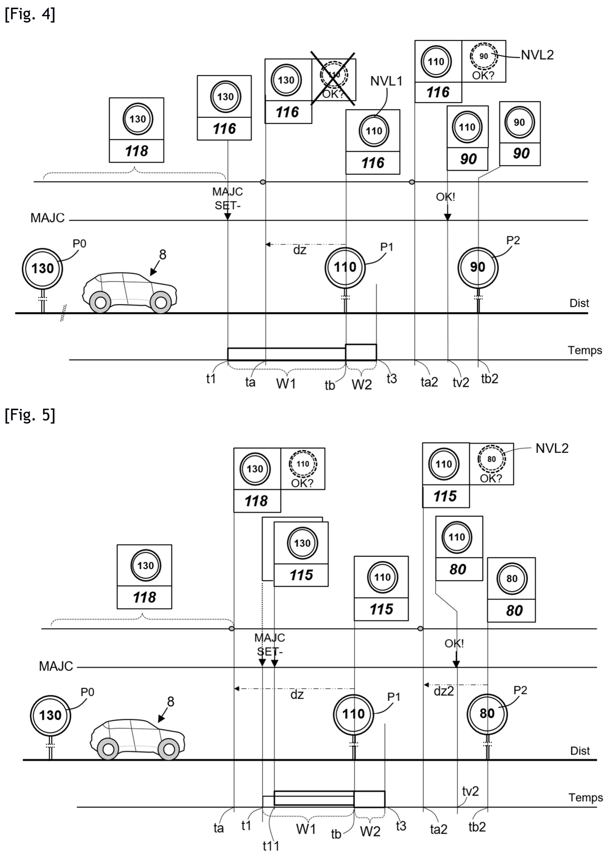

Sur la figure 4, à l'instant temporel t1, le conducteur effectue une action sur le bouton SET-. La consigne VCC passe de 118 à 116 km/h. Le procédé prévoit qu'à ce premier moment t1, une première fenêtre temporelle d'inhibition W1 est initialisée. La première fenêtre temporelle d'inhibition W1 présente une première durée prévisionnelle notée DT1.

Une acquisition ou réception ou détermination d'une nouvelle vitesse limite applicable NVL1 se produit à l'instant à l'instant temporel ta. Selon la présente invention, la proposition de basculer ou de se préparer à basculer vers une nouvelle vitesse de consigne n'est pas faite au conducteur, car la première fenêtre temporelle d'inhibition W1 est toujours active à ce moment ta.

A l'instant temporel tb, le véhicule passe au niveau du panneau P1, cet instant tb est appelé instant de bascule. La vitesse de consigne courante reste à la valeur 116 km/h.

À ce moment tb, la première fenêtre temporelle d'inhibition W1 est avortée et on initialise une deuxième fenêtre temporelle d'inhibition W2, d'une valeur de temporisation DT2.

Lorsque DT2 est écoulée à l'instant t3, la fonction est à nouveau disponible pour proposer une nouvelle modification de la vitesse de consigne, c'est ce qui se produit à l'instant ta2.

La nouvelle vitesse limite NVL2 proposée comme nouvelle consigne est de 90 km/h.

A l'instant tv2, le conducteur accepte en validant par 'Ok'. La vitesse de consigne passe alors de la valeur 116 km/h à la valeur 90 km/h.

A l'instant temporel tb2, le véhicule passe au niveau du panneau P2.

Autrement dit en résumé, la modification volontaire par le conducteur de la consigne inhibe la proposition de modification de vitesse de consigne pendant W1, mais le passage devant le panneau correspondant lance une temporisation W2 relativement courte qui autorise la prise en compte d'une nouvelle vitesse limite et la formulation d'une proposition de changement de vitesse de consigne peu de temps après le passage au niveau du panneau P1.

Sur la figure 5, à l'instant temporel ta, on a une acquisition ou réception ou détermination d'une nouvelle vitesse limite applicable NVL1.

Ceci génère un affichage d'une proposition de changement de vitesse de consigne. Toutefois, dans ce cas de figure, le conducteur ne valide pas cette proposition par 'ok' mais modifie lui-même manuellement et volontairement la consigne en actionnant le bouton SET- afin d'ajuster lui-même la consigne de vitesse de régulation VCC.

Il peut être prévu optionnellement à ce moment de faire disparaître la proposition de changement de vitesse de consigne qui avait été faite au préalable à l'instant ta.

Dans le cas de la figure 5, le conducteur appuie une première fois sur SET- à l'instant t1, puis appuie une deuxième fois sur SET- à l'instant t11. La vitesse de consigne passe alors de la valeur 118 km/h à la valeur 115 km/h.

Il faut remarquer que la conséquence de ces appuis de bouton est la suppression de l'affichage de la proposition de changement de vitesse de consigne.

A l'instant temporel tb, le véhicule passe au niveau du panneau P1, cet instant tb est appelé instant de bascule. La vitesse de consigne courante reste à la valeur 115 km/h.

À ce moment tb, la première fenêtre temporelle d'inhibition W1 est avortée et on initialise la deuxième fenêtre temporelle d'inhibition W2.

Lorsque DT2 est écoulée à l'instant t3, la fonction est à nouveau disponible pour proposer une nouvelle modification de la vitesse de consigne, ceci se produit à l'instant ta2.

La nouvelle vitesse limite NVL2 proposée comme nouvelle consigne est de 80 km/h.

A l'instant tv2, le conducteur accepte en validant par 'Ok'. La vitesse de consigne passe alors de la valeur 115 km/h à la valeur 80 km/h.

A l'instant temporel tb2, le véhicule passe au niveau du panneau P2.

La distance d'anticipation dz2 par rapport au panneau P2 peut être de l'ordre de quelques dizaines de mètres. La distance dz2 peut être plus courte que la distance dz.

On remarque que, dans le cas d'une vitesse limite légale décroissante, la nouvelle vitesse de consigne est appliquée quand le conducteur valide la proposition, à l'instant tv, en anticipation du passage devant le panneau à l'instant tb.

En mode de modification automatique, là aussi la nouvelle vitesse de consigne est appliquée en anticipation par rapport au passage devant le panneau à l'instant tb.

A contrario, dans le cas d'une vitesse limite légale croissante, la nouvelle vitesse de consigne est appliquée au passage du panneau, sans anticipation. Il peut être prévu en outre une autorisation d'accélérer dans une zone très proche du panneau : par exemple 3 ou 4 secondes avant (tv est alors un peu avant tb).

La figure 7 montre un logigramme de fonctionnement des temporisation susmentionnées, alors que la fonction de limitation/régulation de vitesse est active. Une action par le conducteur sur un des boutons SET+ ou SET- provoque l'initialisation de la première fenêtre temporelle d'inhibition W1 (cf boite 71).

La temporisation DT1 de la première fenêtre W1 s'écoule à la boîte 72, et le test de terminaison est représenté par la boîte 73. On remarque que la temporisation W1 est réinitialisée si le conducteur actionne à nouveau un des boutons SET+ ou SET-alors que la temporisation DT1 n'est pas écoulée (cf flèche 77).

La référence EVP représente un événement de passage panneau, plus précisément en pratique le passage du véhicule à l'endroit d'un panneau ou plus généralement d'un lieu d'application d'une nouvelle vitesse limite à respecter.

Lorsqu'un tel événement survient alors que la première temporisation est toujours en cours, alors une deuxième fenêtre temporelle d'inhibition W2 est lancée (cf. boite 74) et la première fenêtre temporelle d'inhibition W1 est avortée.

La temporisation DT2 de la deuxième fenêtre W2 s'écoule à la boîte 75, et le test de terminaison est représenté par la boîte 76. On remarque que la temporisation W1 est réinitialisée si le conducteur actionne à nouveau un des boutons SET+ ou SET-alors que la deuxième temporisation DT2 n'est pas écoulée (cf. flèche 78).

Le procédé prévoit que pendant que la première fenêtre temporelle d'inhibition W1 ou que la deuxième fenêtre temporelle d'inhibition W2 est active, alors une modification automatique de la vitesse de consigne courante n'est pas entreprise et une proposition de modification de la vitesse de consigne courante n'est pas faite.

Il faut remarquer que l'événement de transition de vitesse limite EVP ne correspond pas toujours à la présence physique d'un panneau spécifique de limitation de vitesse ; il peut s'agir d'un panneau d'entrée dans une zone urbaine à vitesse limite réduite, d'une entrée sur le réseau autoroutier, de la survenance de conditions météorologiques dégradées, etc.

Les vitesses limite qui se présentent en séquence peuvent être décroissantes, à savoir VL0 > NVL1 > NVL2, comme les situations illustrées aux figures.

On note DFV la différence entre la vitesse de consigne courante et la nouvelle vitesse limite applicable, par exemple DFV = VCC - NVL1

Les vitesses limite qui se présentent en séquence peuvent aussi être croissantes, à savoir VL0 < NVL1 < NVL2.

On remarque que les valeurs des temporisations DT1 et DT2 peuvent être choisies différemment en fonction du signe de la différence DFV.

## Revendications

1. Procédé de limitation ou régulation de vitesse d'un véhicule automobile (8) permettant de gérer une vitesse de consigne, en fonction au moins d'une action d'un conducteur du véhicule et/ou d'une ou plusieurs vitesses limites applicables, lorsque le véhicule parcours un itinéraire sur une voie routière :
**caractérisé en ce que** le procédé comprend les étapes suivantes :
a- identification d'une modification volontaire de la vitesse de consigne courante (VCC) par le conducteur à un premier moment et initialisation à ce moment (t1) d'une première fenêtre temporelle d'inhibition (W1) d'une première durée prévisionnelle (DT1),
b- acquisition ou réception ou détermination d'une nouvelle vitesse limite applicable (NVL1) différente de la vitesse de consigne courante, sur une prochaine portion de l'itinéraire à parcourir,
c- passage à l'endroit de l'applicabilité de la nouvelle vitesse limite applicable, à un instant de bascule (tb),
d- si, à l'instant de bascule, la première fenêtre temporelle d'inhibition est encore active, terminer la première fenêtre temporelle d'inhibition et lancer une deuxième fenêtre temporelle d'inhibition (W2) d'une deuxième durée prédéterminée (DT2),
et **caractérisé en ce que** le procédé prévoit que pendant que la première ou la deuxième fenêtre temporelle d'inhibition est active, alors une modification automatique de la vitesse de consigne courante n'est pas entreprise et une proposition de modification de la vitesse de consigne courante n'est pas faite.

2. Procédé selon la revendication 1, **caractérisé en ce que** la deuxième durée prédéterminée (DT2) est paramétrable et sa valeur peut dépendre de la vitesse instantanée courante du véhicule ou de la vitesse de consigne courante.

3. Procédé selon l'une des revendications 1 à 2, **caractérisé en ce que** la première durée prédéterminée (DT1) est paramétrable
et sa valeur peut dépendre de la vitesse instantanée courante du véhicule ou de la vitesse de consigne courante.

4. Procédé selon l'une des revendications 1 à 3, **caractérisé en ce qu'**une nouvelle modification volontaire de la vitesse de consigne courante par le conducteur, pendant que la première ou la deuxième fenêtre temporelle d'inhibition est active, réinitialise la première fenêtre temporelle d'inhibition (W1).

5. Procédé selon l'une des revendications 1 à 4, **caractérisé en ce que** si, après acquisition ou réception ou détermination d'une nouvelle vitesse limite applicable (NVL1) différente de la vitesse de consigne courante avec proposition de modification de la vitesse de consigne courante, et si, avant l'endroit de l'applicabilité de la nouvelle vitesse limite applicable, le conducteur génère une modification volontaire de la vitesse de consigne courante (VCC), la proposition de modification de la vitesse de consigne courante, si elle était affichée, est supprimée.

6. Procédé selon l'une des revendications 1 à 5, **caractérisé en ce que** la première fenêtre temporelle d'inhibition (W1) est choisie en fonction de la différence (DFV) entre la vitesse de consigne courante (VCC) et la nouvelle vitesse limite applicable (NVL1, NVL2) sur une prochaine portion de l'itinéraire à parcourir, notamment en fonction du signe de ladite différence.

7. Procédé selon l'une des revendications 1 à 6, **caractérisé en ce que** la nouvelle vitesse limite applicable est obtenue au moins par lecture des panneaux de signalisation via une caméra embarquée (7).

8. Procédé selon l'une des revendications 1 à 7, **caractérisé en ce que** la nouvelle vitesse limite applicable est obtenue au moins à partir d'une base cartographique (5).

9. Système de commande comprenant au moins une unité de commande (2), **caractérisé en ce que** l'unité de commande est configurée pour mettre en œuvre le procédé selon l'une des revendications 1 à 8.

10. Véhicule comprenant un système de commande selon la revendication 9.
